(19) **Europäisches Patentamt / European Patent Office / Office européen des brevets**

(11) **EP 4 147 363 B1**

(12) **FASCICULE DE BREVET EUROPEEN**

(45) Date de publication et mention de la délivrance du brevet:
**10.12.2025   Bulletin 2025/50**

(21) Numéro de dépôt: **21722263.7**

(22) Date de dépôt: **05.05.2021**

(51) Classification Internationale des Brevets (IPC):
***H04B 1/525*** *(2015.01)*

(52) Classification Coopérative des Brevets (CPC):
**H04B 1/525**

(86) Numéro de dépôt international:
**PCT/EP2021/061796**

(87) Numéro de publication internationale:
**WO 2021/224300 (11.11.2021 Gazette 2021/45)**

(54) **SYSTÈME RADAR MONOSTATIQUE À ONDES CONTINUES MODULÉES EN FRÉQUENCE AMÉLIORÉ ET PROCÉDÉ DE CALIBRATION ASSOCIÉ**

**VERBESSERTES FREQUENZMODULIERTES MONOSTATISCHES DAUERSTRICHRADARSYSTEM UND ZUGEHÖRIGES KALIBRIERUNGSVERFAHREN**

**IMPROVED FREQUENCY MODULATED CONTINUOUS WAVE MONOSTATIC RADAR SYSTEM AND ASSOCIATED CALIBRATION METHOD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.05.2020  FR 2004417**

(43) Date de publication de la demande:
**15.03.2023   Bulletin 2023/11**

(73) Titulaire: **THALES**
**92400 Courbevoie (FR)**

(72) Inventeurs:
• **MAZEAU, Thierry**
  **33700 MERIGNAC (FR)**
• **COTTRON, Rodolphe**
  **33700 MERIGNAC (FR)**
• **HODE, Jean Michel**
  **33700 MERIGNAC (FR)**

(74) Mandataire: **Lavoix**
**2, place d'Estienne d'Orves**
**75441 Paris Cedex 09 (FR)**

(56) Documents cités:
EP-A1- 2 439 552       WO-A1-2006/132783
WO-A1-2018/192582     FR-A1- 2 848 302
KR-A- 20120 135 750    KR-B1- 102 090 530

**Description**

L'invention a pour domaine celui des radars monostatiques à ondes continues modulées linéairement en fréquence - LFMCW (« Linear Frequency Modulated Continuous Wave » en anglais).

Un radar monostatique comporte un émetteur et un récepteur qui sont couplés à une antenne au travers d'un circulateur, de manière à pouvoir émettre et recevoir simultanément.

Le circulateur oriente le signal délivré par l'émetteur (ou signal d'émission) vers l'antenne et le signal reçu par l'antenne (ou signal d'antenne) vers le récepteur.

Cependant, la présence de ce circulateur est la source d'un couplage (de l'ordre d'une vingtaine de décibels au minimum) entre la sortie de l'émetteur et l'entrée du récepteur. Ce couplage engendre une fuite du signal d'émission vers le récepteur.

Par conséquent, le signal appliqué en entrée du récepteur (ou signal de réception) résulte de la superposition d'un signal de fuite et du signal d'antenne, qui seul constitue le signal utile.

Ainsi, le signal de fuite est un signal inutile et permanent, perturbant le traitement numérique du signal d'antenne.

De plus, en particulier pour des applications dans le domaine hyperfréquence, le signal de fuite risque de conduire à une saturation des composants du récepteur et éventuellement à leur destruction.

C'est la raison pour laquelle l'étage d'entrée d'un récepteur d'un radar monostatique ne peut pas être muni d'un amplificateur faible bruit, notamment hyperfréquence. Il n'est donc pas possible de diminuer, au-delà d'une certaine limite, le facteur de bruit du récepteur d'un radar monostatique par la mise en œuvre d'un tel amplificateur.

Dans l'état de la technique, il a été proposé d'éliminer le signal de fuite par traitement numérique. Cependant, le signal de fuite ayant dégradé le signal utile dés l'entrée du récepteur par des raies parasites, comme des raies d'intermodulations, le signal utile ne peut plus être amélioré par des post traitements, à moins de mettre en œuvre des traitements très complexes.

Il a également été proposé de prélever une fraction du signal d'émission et, après en avoir modifié l'amplitude et la phase, de la réinjecter sur l'entrée du récepteur pour annuler le signal de fuite.

Une telle approche analogique est intéressante, mais ne permet pas d'annuler le signal de fuite totalement et sur toute la gamme de fréquence, notamment lorsque des dispersions en fréquence ont introduites par exemple par le circulateur.

Le document KR 102 090 530 B1 divulgue un système radar monostatique à ondes continues modulées en fréquence - FMCW comportant une voie comportant un émetteur, propre à délivrer un signal d'émission, et un récepteur, propre à recevoir un signal de réception, couplés par un circulateur à une antenne. La voie comporte en outre une chaine pour annuler une fuite du signal d'émission vers le récepteur, la chaine d'annulation intégrant un générateur d'onde radiofréquence paramétrable pour la génération d'un signal d'annulation. L'injection d'une réplique du signal d'annulation entre le circulateur et le récepteur permet d'annuler la fuite du signal d'émission. Dans ce document, les paramètres du générateur d'onde radiofréquence sont déterminés à partir du calcul des coefficients I et Q d'une réplique du signal de réception.

L'invention a donc pour but de proposer une autre solution à ce problème.

Pour cela l'invention a pour objet un système radar monostatique à ondes continues modulées linéairement en fréquence - LFMCW et un procédé de calibration d'un tel système selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- la figure 1 est une représentation schématique sous forme de blocs fonctionnels d'un mode de réalisation préféré du système radar selon l'invention ;
- la figure 2 est une représentation schématique du procédé selon l'invention, mis en œuvre par le système radar de la figure 1 de manière à annuler le signal de fuite ;
- la figure 3 est un graphe de la fréquence du signal de fuite en fonction du temps ;
- la figure 4 est une représentation schématique des moyens de génération du signal d'émission dans le système radar de la figure 1 ; et,
- la figure 5 est une représentation schématique des moyens de génération du signal d'annulation dans le système radar de la figure 1 .

De manière générale, l'invention consiste à injecter un signal d'annulation à l'entrée du récepteur en contrôlant son retard, sa phase et son amplitude de manière à ce qu'il annule la fuite du signal d'émission.

Un système radar monostatique à ondes continues modulées linéairement en fréquence - LFMCW applique un traitement de «deramping» consistant à transposer le signal de réception avec une réplique du signal d'émission. Est alors obtenu un signal dont la fréquence est égale au décalage en temps (directement corrélé à la distance du réflecteur) et au décalage Doppler (directement corrélé à la vitesse du réflecteur) du signal de réception par rapport au signal d'émission.

Lorsque le signal de réception comporte une fuite du signal d'émission, celle-ci est alors transposée autour de 0 Hz par le traitement de « deramping ».

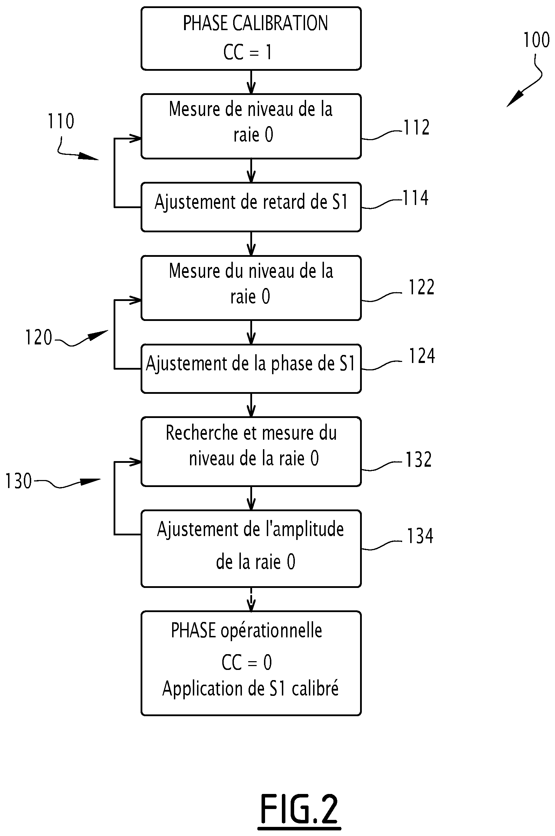

Après application par exemple d'une transformée de Fourier rapide - FFT, la raie résiduelle correspondante (aussi dénommée « raie 0 » comme par exemple sur la figure 2) est exploitable. Notamment, son amplitude est proportionnelle à l'amplitude de la fuite du signal d'émission.

L'invention se fonde sur l'exploitation de cette raie résiduelle pour déterminer les paramètres du signal d'annulation qui conduisent effectivement à une annulation de la fuite du signal d'émission.

L'invention met également en œuvre un composant de synthèse numérique directe pour générer le signal d'annulation adapté.

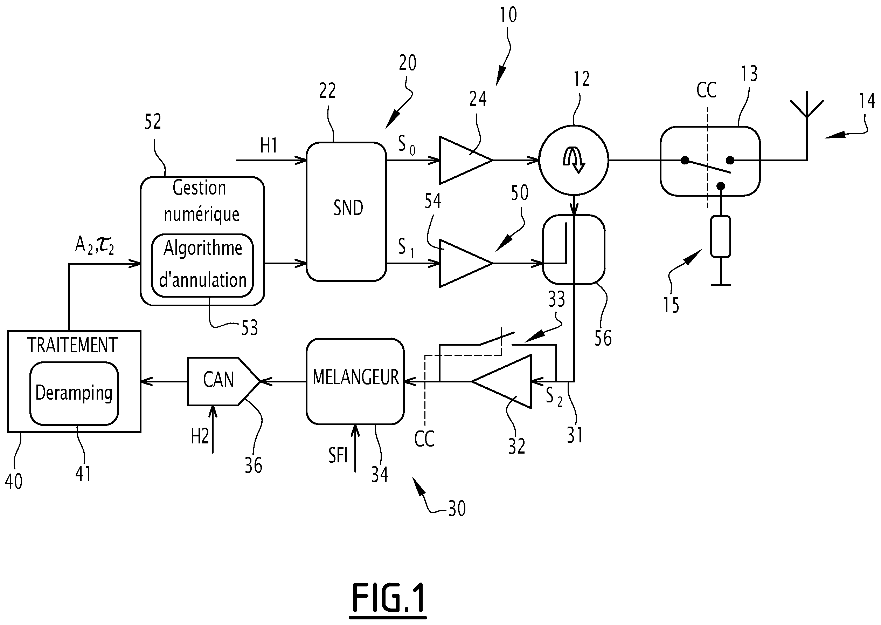

Un mode de réalisation préféré du système radar selon l'invention va maintenant être présenté en se référant à la figure 1.

Le système radar 10 est un radar monostatique à ondes continues modulées linéairement en fréquence - LFMCW.

Le système radar 10 comporte une voie. En variante, il comporte une pluralité de voies identiques entre elles et à celle représentée sur la figure 1.

La voie du système radar 10 est constituée d'un émetteur 20 et d'un récepteur 30, couplés par un circulateur 12 à une antenne 14, ainsi qu'une chaine d'annulation 50 pour la génération d'un signal d'annulation du signal de fuite.

Entre le circulateur 12 et l'antenne 14, le système radar 10 comporte un interrupteur hyperfréquence 13, ayant pour fonction de connecter la sortie côté antenne du circulateur 12 soit à l'antenne 14, soit à un élément résistif 15. L'élément résistif 15 constitue une charge de référence pour une phase de calibration du système radar 10. L'élément résistif 15 présente une résistance caractéristique, typiquement de 50 Ohms. L'état de l'interrupteur hyperfréquence 13 est commandé par un signal de contrôle CC.

Le signal de contrôle est généré par un moyen de sélection du mode de fonctionnement du système radar 10. Ce moyen, qui n'est pas représenté sur les figures, permet de passer le système radar 10 d'un mode opérationnel à un mode de calibration et inversement.

L'émetteur 20 comporte un générateur de forme d'onde, qui est de préférence constitué par un composant de synthèse numérique directe - SND 22.

La SND 22 est cadencé par un premier signal d'horloge H1.

La SND 22 permet de générer, sur un premier port de sortie, un signal d'émission $S_0$ analogique. Le signal d'émission est de la forme générique :

$$[\text{Math 1}] \qquad S_0(t) = A_0 . e^{-2\pi j . f . t}$$

où $A_0$ est l'amplitude du signal d'émission, t le temps et f la fréquence.

La fréquence f est une fonction du temps t. Par exemple, pour un signal d'émission $S_0$ modulé linéairement en fréquence :

$$[\text{Math 2}] \qquad f(t) = K . t$$

avec $K = \frac{B}{T}$ la pente de la rampe de fréquence, B étant la borne supérieure de la bande de fréquence et T étant la période d'émission.

La forme du signal d'émission devient alors :

$$[\text{Math 3}] \qquad S_0(t) = A_0 . e^{-2\pi j . K . t^2}$$

Ce signal d'émission $S_0$ est appliqué en entrée d'un moyen amplificateur 24 avant d'être appliqué en entrée du circulateur 12 pour être transmis vers l'antenne 14.

Une fraction de ce signal d'émission amplifié est transmise sur la ligne d'entrée 31 du récepteur 30. Ce signal de fuite $S_0'$ est de la forme générale :

$$[\text{Math 4}] \qquad S_0'(t) = A_0' . e^{2\pi j . f . (t - \tau_0) + \varphi_0}$$

Dans cette expression, $A_0'$ est l'amplitude du signal de fuite, t le temps, f la fréquence, $\tau_0$ le retard entre le signal de fuite et le signal d'émission, et $\varphi_0$ le déphasage entre le signal de fuite et le signal d'émission.

Le récepteur 30 prend en entrée le signal présent sur la ligne d'entrée 31, dénommé signal de réception $S_2$.

Le récepteur 30 comporte avantageusement un amplificateur hyperfréquence faible bruit 32. En effet, la présente invention permettant de supprimer tout signal de fuite, ce dernier ne risque plus de saturer les composants du récepteur, qui peut par conséquent être avantageusement équipé d'un amplificateur hyperfréquence faible bruit de manière à améliorer le rapport signal sur bruit.

En cas de présence de l'amplificateur 32, un interrupteur de contournement 33 permet de shunter l'amplificateur 32 dans la phase de calibration du système radar 10, afin d'éviter qu'un résidu du signal de fuite ne détériore l'amplificateur 32. L'interrupteur de contournement 33 est par exemple commandé dans l'état ouvert ou dans l'état fermé par le signal de commande CC.

En aval de l'amplificateur 32 et de l'interrupteur de contournement 33 lorsqu'ils existent, le récepteur 30 comporte un mélangeur 34 permettant de mélanger le signal de réception $S_2$ (éventuellement amplifié) avec un signal SFI, qui se caractérise par une fréquence intermédiaire FI. Le mélangeur 34 permet la transposition du signal de réception $S_2$ dans une bande de fréquence de base.

En aval du mélangeur 34, le récepteur 30 comporte un convertisseur analogique numérique 36 permettant la numérisation du signal de réception transposé. Le convertisseur 36 fonctionne avec un second signal d'horloge H2.

Une fois le signal de réception numérisé, un module de traitement 40 permet de réaliser différents traitements numériques.

En particulier, le module 40 met avantageusement en œuvre un algorithme de « deramping » 41. Un tel algorithme est connu de l'homme du métier. Il permet, en mélangeant le signal de réception avec une réplique du signal d'émission de produire un décalage instantané en fréquence, qui, après application d'une transformation de Fourier rapide, permet d'obtenir le retard entre le signal de réception et le signal d'émission et l'amplitude du signal de réception. Il est à noter que, pour ce type de système radar, ce retard est proportionnel à la distance. Il permet par conséquent de mesurer la distance entre le système RADAR et le réflecteur de l'onde émise.

Le module 40 permet ainsi de déterminer le retard $\tau_2$ et l'amplitude $A_2$ de la composante du signal de réception $S_2$ correspondant au signal de fuite, qui se caractérise par un décalage instantané en fréquence au voisinage de 0 Hz.

La chaine d'annulation 50 comporte un dispositif de gestion numérique 52 propre à exécuter un algorithme d'annulation 53.

Cet algorithme d'annulation 53 permet, dans une phase de calibration du système radar 10, de déterminer les paramètres optimaux d'un signal d'annulation $S_1$, et, dans une phase opérationnelle, de piloter la génération du signal d'annulation $S_1$ en utilisant les paramètres optimaux déterminés lors de la phase de calibration.

Le dispositif de gestion numérique 52 commande un générateur de forme d'onde propre à générer le signal d'annulation $S_1$. Avantageusement, la SND 22 est utilisé pour générer, sur un second port de sortie, le signal d'annulation $S_1$.

En variante, un composant SND dédié pourrait être utilisé pour la génération du signal d'annulation, mais il faudrait alors s'assurer d'une parfaite synchronisation avec le composant SND dédié à la génération du signal d'émission. C'est la raison pour laquelle, l'utilisation de la SND 22 pour la génération des différents signaux, et par conséquent l'utilisation du même signal d'horloge H1, est avantageux.

La SND 22 est donc propre à générer le signal d'annulation $S_1$ de la forme :

$$[\text{Math 5}] \qquad S_1(t) = A_1 . e^{2\pi j.f.(t-\tau_1)+\varphi_1}$$

Dans cette expression, $A_1$ est l'amplitude du signal d'annulation, t le temps, f la fréquence, $\tau_1$ le retard entre le signal d'annulation et le signal d'émission, et $\varphi_1$ le déphasage entre le signal d'annulation et le signal d'émission.

Et en modulant la fréquence en fonction du temps de la même manière que le signal d'émission, le signal d'annulation s'écrit :

$$[\text{Math 6}] \qquad S_1(t) = A_1 . e^{2\pi j.kt.(t-\tau_1)+\varphi_1}$$

Le signal $S_1$ est appliqué en entrée de moyens amplificateur 54 avant d'être appliqué à un coupleur 56 prévu le long de la ligne d'entrée 31 du récepteur 30, entre le circulateur 12 et l'entrée du récepteur 30.

Le coupleur 56 permet d'injecter sur la ligne d'entrée 31 une réplique du signal d'annulation. Le coupleur 56 est tel que la réplique $S_1'$ s'écrit :

$$[\text{Math 7}] \qquad S_1'(t) = A_1' . e^{2\pi j.Kt.(t-\tau_1)+\varphi_1+\pi}$$

Dans cette relation, $A_1'$ est l'amplitude de la réplique (proportionnelle à l'amplitude $A_1$), et le coupleur 56 n'introduit qu'un déphasage de 180° sur la phase du signal d'annulation.

Cette réplique du signal d'annulation se superpose au signal délivré par le circulateur 12 sur la ligne d'entrée 31 pour constituer le signal de réception $S_2$.

Le dispositif de gestion numérique 52 met en œuvre un procédé, tel que le procédé 100 de la figure 2.

Le procédé 100 comporte une phase de calibration pour déterminer les paramètres optimaux du signal d'annulation $S_1$ qui permettent une annulation du signal de fuite $S_0'(t)$ en entrée du récepteur 30.

Il s'agit donc de déterminer les valeurs optimales des paramètres $A_1$, $\tau_1$ et $\varphi_1$ du signal d'annulation $S_1$ pour que la réplique du signal d'annulation $S_1'$ annule le signal de fuite $S_0'$ sur l'entrée su récepteur 30.

Dans cette phase de calibration, le signal de commande CC prend par exemple la valeur haute de manière à basculer l'interrupteur 13 dans l'état dans lequel le circulateur 12 est connecté à l'élément résistif 15 et l'interrupteur 33 est dans l'état fermé de manière à contourner l'amplificateur 32.

Un signal d'annulation $S_1$ avec des paramètres $A_1$, $\tau_1$ et $\varphi_1$ quelconque est généré en même temps qu'un signal d'émission. Le signal de réception est traité numériquement pour déterminer l'amplitude $A_2$ et le retard $\tau_2$ de la raie résiduelle.

Le procédé 100 entre dans une première boucle 110 de détermination de la valeur optimale du paramètre de retard $\tau_1$. Cette première boucle consiste à itérer une première sous-étape 112 consistant à traiter le signal de réception de manière à mesurer son amplitude et une seconde sous-étape 114 consistant à modifier la valeur du paramètre de retard $\tau_1$ du signal d'annulation. L'itération est réalisée de manière à identifier le minimum de l'amplitude $A_2$ par dichotomie (ou plus généralement une méthode numérique de recherche rapide de racine, telle que par exemple la méthode de Newton) sur la valeur du paramètre de retard $\tau_1$. Le procédé 100 sort de la première boucle 110 lorsque la modification de la valeur du paramètre de retard $\tau_1$ ne conduit plus à une variation appréciable du niveau du signal de réception. Cette valeur du paramètre de retard est alors mémorisée en tant que retard optimal.

Le procédé 100 entre alors dans une seconde boucle 120 de détermination du paramètre de phase $\varphi_1$. Cette seconde boucle consiste à itérer une première sous-étape 122 consistant à traiter le signal de réception de manière à mesurer son amplitude et une seconde sous-étape 124 consistant à modifier la valeur du paramètre de phase $\varphi_1$ (le signal d'annulation étant systématiquement généré avec le retard optimal déterminé à l'issue de la première boucle 112). L'itération est réalisée de manière à identifier le minimum de l'amplitude du signal de réception par dichotomie (ou plus généralement une méthode numérique de recherche rapide de racine, telle que par exemple la méthode de Newton) sur la valeur du paramètre de phase $\varphi_1$. Le procédé 100 sort de la seconde boucle 120 lorsque la modification de la valeur du paramètre de phase $\varphi_1$ ne conduit plus à une variation appréciable du niveau du signal de réception. La valeur du paramètre de phase est alors mémorisée en tant que phase optimale.

Le procédé 100 passe enfin dans une troisième boucle 130 de détermination du paramètre d'amplitude $A_1$. Cette troisième boucle consiste à itérer une première sous-étape 132 consistant à traiter le signal de réception de manière à mesurer son amplitude et une seconde sous-étape 134 consistant à modifier la valeur du paramètre d'amplitude $A_1$ (le signal d'annulation étant systématiquement généré avec le retard optimal déterminé à l'issue de la première boucle 110 et la phase optimale déterminée à l'issue de la seconde boucle 120). L'itération est réalisée de manière à identifier le minimum de l'amplitude du signal de réception (minimum qui doit maintenant correspondre à une amplitude nulle du signal de réception) par dichotomie (ou plus généralement une méthode numérique de recherche rapide de racine, telle que par exemple la méthode de Newton) sur la valeur du paramètre d'amplitude $A_1$. Le procédé 100 sort de la troisième boucle 130 lorsque la modification de la valeur du paramètre d'amplitude ne $A_1$ conduit plus à une variation appréciable du niveau du signal de réception. La valeur du paramètre d'amplitude est alors mémorisée en tant qu'amplitude optimale.

Une fois les paramètres optimaux du signal d'annulation calibrés, le procédé 100 passe dans une phase opérationnelle. Le signal de commande CC est basculé dans l'état bas de manière à placer l'interrupteur 13 dans l'état connectant le circulateur 12 à l'antenne 14 et l'interrupteur 33 dans l'état ouvert 33.

Puis, le dispositif de gestion 52 pilote la SND 22 pour qu'il délivre un signal d'annulation $S_1$ en corrélation avec chaque émission d'un signal d'émission $S_0$. Dans le mode opérationnel, le signal d'annulation est généré à partir des paramètres optimaux déterminés dans la phase de calibration.

Ainsi à chaque instant de l'utilisation du système radar 10, une réplique du signal d'annulation se superpose au signal de fuite sur la ligne d'entrée du récepteur de manière à annuler le signal de fuite. Ainsi le signal de réception correspond uniquement au signal d'antenne.

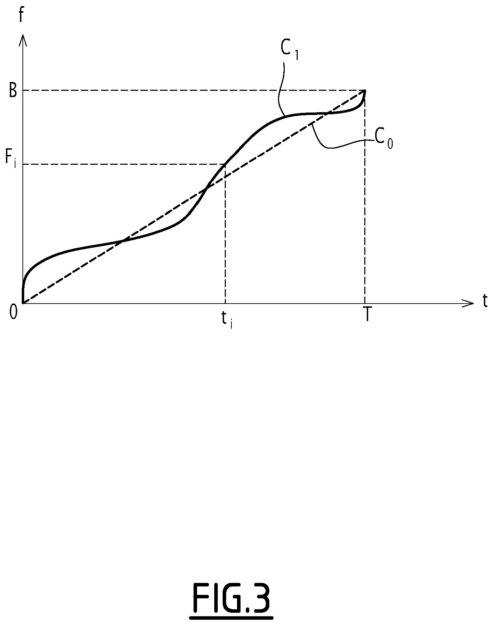

Sur la figure 3 est représenté, de manière schématique, la relation entre la fréquence f et le temps t du signal de fuite $S_1'$.

Le signal de fuite dérive du signal d'émission $S_1$, qui est émis entre les instants 0 et T et s'étale sur une bande de fréquence par exemple entre une fréquence minimale nulle et la fréquence maximale B.

Dans un cas simple, le circulateur 12 n'introduit aucune distorsion, et la fréquence du signal de fuite conserve la linéarité du signal d'émission. Ceci est illustré par la courbe $C_0$ sur la figure 3.

Dans ce cas simple, la phase de calibration du procédé présenté précédemment est valide sur l'ensemble de la bande de fréquence.

Cependant, dans le cas général, la circuiterie (comme par exemple le circulateur 12) introduit une dispersion en fréquence ( $d(f) = \dfrac{d\varphi}{df}$ ) de sorte que la fréquence du signal de fuite n'est plus exactement linéaire par rapport au temps. Ce cas général est illustré par la courbe $C_1$ sur la figure 3.

Pour traiter ce cas général, la phase de calibration du procédé de la figure 2 est répétée pour différentes valeurs discrètes de la fréquence du signal d'émission.

Plus précisément, la bande de fréquence est subdivisée en N intervalles indexés par un entier i.

Pour l'itération i du procédé de calibration 100, un signal d'émission est généré par la SND 22 à la fréquence $F_i$. On recherche alors les valeurs optimales des paramètres d'amplitude $A_{1j}$, de retard $\tau_{1i}$ et de phase $\varphi_{1i}$ d'un signal d'annulation de fréquence $F_i$ permettant d'annuler le signal de fuite correspondant.

A l'issue de la détermination des paramètres optimaux pour chaque intervalle de la bande de fréquence, une interpolation des valeurs obtenues pour ces paramètres optimaux permet de déterminer des paramètres optimaux interpolés pour chaque valeur de la fréquence sur la bande de fréquence.

Dans la phase opérationnelle, à chaque instant de la génération du signal d'émission (i.e. à chaque valeur de la fréquence, puisque celle-ci est proportionnelle au temps), les paramètres optimaux interpolés sont utilisés pour déterminer les valeurs des paramètres $A_1$, $\tau_1$ et d $\varphi_1$ à la valeur de la fréquence considérée, qui sont ensuite utilisées par la SND 22 pour générer le signal d'annulation à l'instant considéré.

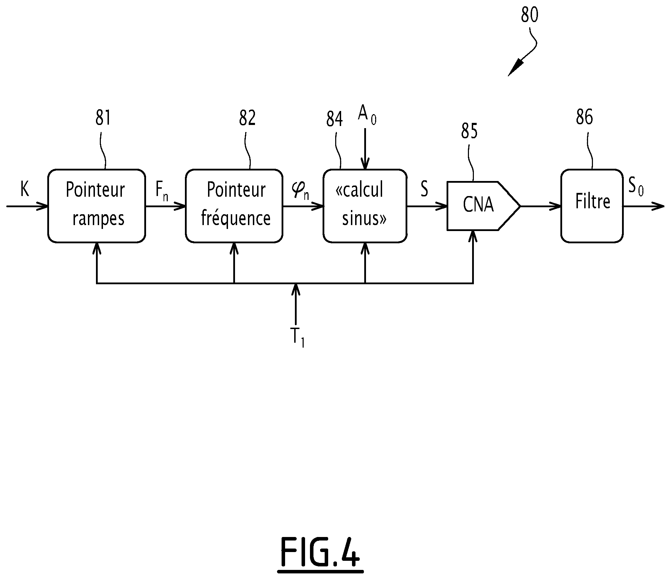

La figure 4 est une représentation sous la forme d'une suite de blocs fonctionnels de la manière dont la SND 22 génère le signal d'émission.

Un bloc « calcul sinus » 84 est propre à générer un signal S correspondant au sinus d'une phase $\varphi_n$, qui est incrémentée à chaque cycle d'horloge $T_1$, par l'amplitude $A_1$ (lue depuis un espace mémoire spécifique).

En amont, un bloc « pointeur fréquence » 82 adresse le bloc «calcul sinus» 84 avec la valeur numérique de la phase $\varphi_n$ à prendre en compte pour le $n^{ème}$ cycle d'horloge :

[Math 8]
$$\varphi_n = 2.\pi.F_n.n.T_1 \text{ pour } n = 0 \text{ à N}$$

Un bloc « pointeur rampe » 81 adresse le bloc «pointeur fréquence» 82 avec la valeur numérique de la fréquence $F_n$ à prendre en compte pour le $n^{ème}$ cycle d'horloge :

[Math 9]
$$F_n = K.n.T_1$$

Où K est la rampe (lue depuis un espace mémoire spécifique) que l'on souhaite conférer à la modulation fréquentielle du signal d'émission.

Les valeurs numériques successives en sortie du bloc «calcul sinus» 84 sont converties en un signal analogique par un convertisseur numérique analogique - CNA 85.

La sortie du CNA 85 est filtrée par un bloc de filtrage 86 afin de lisser le signal analogique pour en enlevant les signaux harmoniques issus de la conversion.

En sortie, le signal d'émission $S_0$ est délivré sur un premier port de sortie du SND 22.

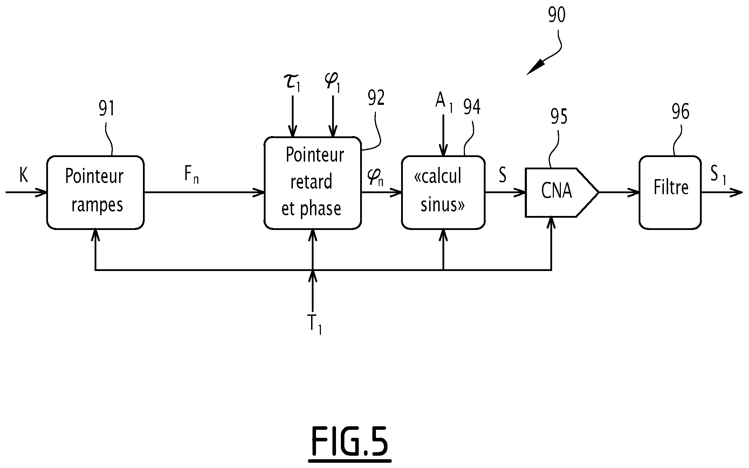

De manière similaire, la figure 5 est une représentation sous la forme d'une suite de blocs fonctionnels de la manière dont la SND 22 génère le signal d'annulation.

Un bloc « pointeur rampe » 91 détermine la valeur numérique de la fréquence $F_n$ pour le $n^{ème}$ cycle d'horloge à partir de la rampe K que l'on confère à la modulation fréquentielle du signal d'émission et du cycle $T_1$ du signal d'horloge H1 utilisé pour la génération du signal d'émission :

[Math 10]
$$F_n = K.n.T_1$$

Puis, un bloc « pointeur fréquence, retard et phase» 92 détermine la valeur numérique de la phase $\varphi_n$ à prendre en compte pour le $n^{ème}$ cycle d'horloge :

[Math 11]
$$\varphi_n = 2\pi.F_n.(n.T_1 - \tau_1) + \varphi_1$$

Où $\tau_1$ et $\varphi_1$ sont les valeurs des paramètres optimaux du signal d'annulation (qui dépendant éventuellement de la valeur de la fréquence $F_n$) qui sont lues dans une mémoire par exemple du dispositif de gestion numérique 52.

Un bloc « calcul sinus » 94 est ensuite propre à générer un signal S correspondant au sinus de phase $\varphi_n$ multiplié par une amplitude correspondant à l'amplitude optimale $A_1$ du signal d'annulation.

Les valeurs numériques successives en sortie du bloc «calcul sinus» 94 sont converties en un signal analogique par un convertisseur numérique analogique - CNA 95.

La sortie du CNA 95 est filtrée par un bloc de filtrage 96 afin de lisser le signal analogique pour en enlevant les signaux harmoniques issus de la conversion.

En sortie, le signal d'annulation $S_1$ est délivré sur un second port de sortie de la SND 22.

De nombreuses variantes sont envisageables par l'homme du métier. Notamment, les valeurs optimales des paramètres du signal d'annulation peuvent être obtenues par la mise en œuvre d'autres procédés de calibration. D'autres processus que celui de la dichotomie peuvent être utilisés. Par exemple, le procédé permettrait d'ajuster les paramètres de délai, phase et amplitude du signal d'annulation simultanément. Des processus fondés sur des réseaux de neurones sont également envisageables.

Comme cela est connu de l'homme du métier, si, dans le mode de réalisation de la figure 1, le « deramping » est réalisé au niveau du traitement numérique, il peut, en variante, être réalisé en amont du convertisseur analogique - numérique, dans le domaine hyperfréquence, au niveau du mélangeur 34, en utilisant un signal SFI réplique du signal d'émission.

Dans le cas d'une calibration sur plusieurs pas de fréquences, dans un domaine limité de retard, le procédé peut être modifié en ne réalisant pas l'étape d'ajustement de la phase $\varphi_{1i}$ de celle d'ajustement du retard $\tau_{1i}$, mais en les combinant dans une unique étape de détermination de la valeur optimale d'un paramètre de retard de phase global.

La présente invention permet d'améliorer les performances de la chaine de réception d'un radar monostatique LFMCW en éliminant les problèmes liés à la fuite du signal d'émission vers le récepteur. Le rapport signal sur bruit est donc amélioré.

Elle permet ainsi de rajouter un amplificateur faible bruit en entrée du récepteur sans risque de saturation par la fuite du signal d'émission. Le rapport signal sur bruit est encore davantage amélioré.

Chaque voie pouvant être calibrée indépendamment, l'invention se prête bien aux architectures des récepteurs radar modernes qui sont multivoies ou MIMO.

## Revendications

1. Système radar monostatique à ondes continues modulées linéairement en fréquence - LFMCW (10) comportant au moins une voie comportant un émetteur (20), propre à délivrer un signal d'émission, et un récepteur (30), propre à recevoir un signal de réception, couplés par un circulateur (12) à une antenne (14), l'émetteur intégrant un premier générateur d'onde radiofréquence, paramétrable en amplitude, fréquence, phase et/ou retard, pour la génération du signal d'émission, ladite au moins une voie comportant en outre une chaine d'annulation (50) pour annuler une fuite du signal d'émission vers le récepteur, la chaine d'annulation intégrant un second générateur d'onde radiofréquence (22), paramétrable en amplitude, fréquence, phase et/ou retard, pour la génération d'un signal d'annulation, et un coupleur (56) interposé entre le circulateur (12) et le récepteur (30) et propre, à partir du signal d'annulation, à injecter une réplique du signal d'annulation vers le récepteur afin d'annuler la fuite du signal d'émission, les premier et second générateurs d'onde radiofréquence étant synchronisés l'un avec l'autre, **caractérisé en ce que** :

   le récepteur (30) comporte un module de traitement numérique (40) adapté pour effectuer un traitement de « deramping », suivi d'un traitement de transformée de Fourier rapide, pour déterminer des grandeurs du signal de réception ; et,
   la chaîne d'annulation (50) comporte un dispositif de gestion numérique (52) propre à exécuter un algorithme d'annulation (53) permettant de déterminer, au cours d'une phase de calibration du système radar, les paramètres optimaux du signal d'annulation annulant la fuite du signal d'émission, à partir des grandeurs du signal de réception déterminées par le module de traitement numérique (40) du récepteur (30),
   le récepteur (30) comportant en entrée un amplificateur faible bruit (32) et un interrupteur de contournement (33) monté en parallèle de l'amplificateur faible bruit (32), de manière à shunter l'amplificateur faible bruit (32) dans la phase de calibration du système radar.

2. Système radar selon la revendication 1, dans lequel les premier et second générateur d'onde radiofréquence sont associés dans un même composant de synthèse numérique directe (22).

3. Système radar selon la revendication 1 ou la revendication 2, comportant un interrupteur (13) interposé entre le circulateur (12) et l'antenne (14) de manière à connecter une sortie côté antenne du circulateur (12) à une charge de référence (15) dans une phase de calibration du système radar permettant de déterminer les paramètres optimaux du signal d'annulation.

4. Système radar selon l'une des revendications 1 à 3, dans lequel le second générateur d'onde radiofréquence est propre à lire dans un moyen de mémorisation du système radar des paramètres optimaux du signal d'annulation à générer.

5. Système radar selon l'une des revendications 1 à 4, dans lequel les paramètres optimaux comportent une amplitude, un retard et une phase, ces paramètres optimaux pouvant dépendre de la fréquence.

6. Système radar selon la revendication 5, dans lequel, une dispersion en fréquence étant introduite de sorte que la fréquence du signal de fuite n'est plus exactement linéaire par rapport au temps, le système est adapté pour que, dans une phase de calibration, pour chaque valeur discrète de la fréquence $F_i$, obtenue en subdivisant la bande de fréquence en N intervalles indexés par un entier i, le premier générateur d'onde radiofréquence (22) est adapté pour générer un signal d'émission à la fréquence $F_i$, et le dispositif de gestion numérique (52) est adapté pour déterminer les valeurs des paramètres optimaux d'amplitude $A_{1j}$, de retard $\tau_{1i}$ et de phase $\varphi_{1i}$ d'un signal d'annulation de fréquence $F_i$ permettant d'annuler le signal de fuite correspondant, et d'effectuer une interpolation des valeurs déterminées pour déterminer des valeurs interpolées des paramètres optimaux pour chaque valeur de la fréquence sur la bande de fréquence, de sorte que, dans une phase opérationnelle, à chaque instant de la génération du signal d'émission, le premier générateur d'onde radiofréquence (22) utilise les valeurs interpolées des paramètres optimaux pour générer le signal d'annulation à l'instant considéré.

7. Procédé de calibration d'un système radar monostatique à ondes continues modulées linéairement en fréquence - LFMCW (10) selon l'une quelconque des revendications 1 à 6, consistant, alors que l'interrupteur de contournement (33) est dans l'état fermé de manière à shunter l'amplificateur faible bruit (32), à générer un signal d'émission et un signal d'annulation, puis à faire varier les paramètres du signal d'annulation pour déterminer des valeurs optimales desdits paramètres telles qu'une fuite du signal d'émission vers le récepteur soit annulée.

8. Procédé selon la revendication 7, dans lequel, une dispersion en fréquence étant introduite de sorte que la fréquence du signal de fuite n'est plus exactement linéaire par rapport au temps, le procédé est itéré pour une pluralité de valeurs discrètes de la fréquence $F_i$ obtenues en subdivisant la bande de fréquence en N intervalles indexés par un entier i, l'itération i consistant à :

- générer un signal d'émission par le premier générateur d'onde radiofréquence (22) à la fréquence $F_i$ ;
- déterminer les valeurs des paramètres optimaux d'amplitude $A_{1j}$, de retard $\tau_{1i}$ et de phase $\varphi_{1i}$ d'un signal d'annulation de fréquence $F_i$ permettant d'annuler le signal de fuite correspondant ;
- suite à la détermination des valeurs des paramètres optimaux pour chaque intervalle de la bande de fréquence, une interpolation des valeurs déterminées est effectuée pour déterminer des valeurs interpolées des paramètres optimaux pour chaque valeur de la fréquence sur la bande de fréquence ;
- Et, à chaque instant de la génération du signal d'émission, utiliser les valeurs interpolées des paramètres optimaux pour générer le signal d'annulation à l'instant considéré.

**Patentansprüche**

1. Monostatisches Radarsystem mit linear frequenzmodulierten Dauerstrichwellen - LFMCW (10), aufweisend mindestens einen Kanal, der einen Sender (20) aufweist, der imstande ist, ein Sendesignal bereitzustellen, und einen Empfänger (30), der imstande ist, ein Empfangssignal zu empfangen, die über einen Zirkulator (12) mit einer Antenne (14) gekoppelt sind, wobei der Sender einen ersten Hochfrequenzwellengenerator, der hinsichtlich Amplitude, Frequenz, Phase und/oder Verzögerung parametrierbar ist, zur Erzeugung des Sendesignals enthält, wobei der mindestens eine Kanal ferner eine Annullierungskette (50) aufweist, um einen Verlust des Sendesignals zum Empfänger zu annullieren, wobei die Annullierungskette einen zweiten Hochfrequenzwellengenerator (22), der hinsichtlich Amplitude, Frequenz, Phase und/oder Verzögerung parametrierbar ist, zur Erzeugung eines Annullierungssignals, und einen Koppler (56) enthält, der zwischen dem Zirkulator (12) und dem Empfänger (30) angeordnet ist und imstande, anhand des Annullierungssignals eine Kopie des Annullierungssignals in den Empfänger einzuspeisen, um den Verlust des Sendesignals zu annullieren, wobei der erste und der zweite Hochfrequenzwellengenerator miteinander synchronisiert sind, **dadurch gekennzeichnet, dass**:

der Empfänger (30) ein digitales Verarbeitungsmodul (40) aufweist, das zur Durchführung einer "Deramping"-Verarbeitung geeignet ist, gefolgt von einer Verarbeitung einer schnellen Fourier-Transformation zur Bestimmung der Größen des Empfangssignals; und

die Annullierungskette (50) eine digitale Verwaltungsvorrichtung (52) aufweist, die zur Ausführung eines Annullierungsalgorithmus (53) geeignet ist, der gestattet, während einer Kalibrierungsphase des Radarsystems die optimalen Parameter des Annullierungssignals, das den Verlust des Sendesignals annulliert, anhand der von dem digitalen Verarbeitungsmodul (40) des Empfängers (30) bestimmten Größen des Empfangssignals zu bestimmen,

wobei der Empfänger (30) am Eingang einen rauscharmen Verstärker (32) und einen Bypass-Schalter (33) aufweist, der parallel zum rauscharmen Verstärker (32) angebracht ist, um den rauscharmen Verstärker (32) in der Kalibrierungsphase des Radarsystems zu überbrücken.

2. Radarsystem nach Anspruch 1, wobei der erste und der zweite Hochfrequenzwellengenerator in derselben direkten digitalen Synthesekomponente (22) zusammengefasst sind.

3. Radarsystem nach Anspruch 1 oder Anspruch 2, aufweisend einen Schalter (13), der zwischen dem Zirkulator (12) und der Antenne (14) angeordnet ist, um einen antennenseitigen Ausgang des Zirkulators (12) in einer Kalibrierungsphase des Radarsystems mit einer Referenzlast (15) zu verbinden, um die optimalen Parameter des Annullierungssignals zu bestimmen.

4. Radarsystem nach einem der Ansprüche 1 bis 3, wobei der zweite Hochfrequenzwellengenerator zum Auslesen der optimalen Parameter des zu erzeugenden Annullierungssignals aus einem Speichermittel des Radarsystems imstande ist.

5. Radarsystem nach einem der Ansprüche 1 bis 4, wobei die optimalen Parameter eine Amplitude, eine Verzögerung und eine Phase aufweisen, wobei diese optimalen Parameter von der Frequenz abhängen können.

6. Radarsystem nach Anspruch 5, wobei, wenn eine Frequenzdispersion eingeführt wird, so dass die Frequenz des Verlustsignals nicht mehr exakt linear relativ zur Zeit ist, das System geeignet ist, dass in einer Kalibrierungsphase für jeden diskreten Wert der Frequenz $F_i$, erhalten durch Unterteilen des Frequenzbands in N mit einer Ganzzahl i indexierte Intervalle, der erste Hochfrequenzwellengenerator (22) zur Erzeugung eines Sendesignals mit der Frequenz $F_i$ geeignet ist, und die digitale Verwaltungsvorrichtung (52) zur Bestimmung der Werte der optimalen Parameter von Amplitude $A_{1j}$, Verzögerung $\tau_{1i}$ und Phase $\varphi_{1i}$ eines Annullierungssignals mit der Frequenz $F_i$ geeignet ist, die ermöglichen, das entsprechende Verlustsignal zu annullieren, und eine Interpolation der bestimmten Werte zur Bestimmung der interpolierten Werte der optimalen Parameter für jeden Wert der Frequenz auf dem Frequenzband durchzuführen, so dass in einer Betriebsphase zu jedem Zeitpunkt der Erzeugung des Sendesignals der erste Hochfrequenzwellengenerator (22) die interpolierten Werte der optimalen Parameter zur Erzeugung des Annullierungssignals zum betreffenden Zeitpunkt verwendet.

7. Verfahren zur Kalibrierung eines monostatischen Radarsystems mit linear frequenzmodulierten Dauerstrichwellen - LFMCW (10) nach einem der Ansprüche 1 bis 6, das darin besteht, während der sich der Bypass-Schalter (33) im geschlossenen Zustand befindet, so dass der rauscharme Verstärker (32) überbrückt wird, ein Sendesignal und ein Annullierungssignal zu erzeugen, dann die Parameter des Annullierungssignals zu ändern, um optimale Werte der Parameter zu bestimmen, so dass ein Verlust des Sendesignals zum Empfänger annulliert wird.

8. Verfahren nach Anspruch 7, wobei, wenn eine Frequenzdispersion eingeführt wird, so dass die Frequenz des Verlustsignals nicht mehr exakt linear relativ zur Zeit ist, das Verfahren für eine Vielzahl diskreter Werte der Frequenz $F_i$, erhalten durch Unterteilen des Frequenzbands in N mit einer Ganzzahl i indexierte Intervalle, wiederholt wird, wobei die Wiederholung i darin besteht:

- Erzeugen eines Sendesignals durch den ersten Hochfrequenzwellengenerator (22) mit der Frequenz $F_i$,
- Bestimmen der Werte der optimalen Parameter von Amplitude $A_{1j}$, Verzögerung $\tau_{1i}$ und Phase $\varphi_{1i}$ eines Annullierungssignals mit der Frequenz $F_i$, die ermöglichen, das entsprechende Verlustsignal zu annullieren;
- nach der Bestimmung der Werte der optimalen Parameter für jedes Intervall des Frequenzbands, Interpolieren der bestimmten Werte zur Bestimmung der interpolierten Werte der optimalen Parameter für jeden Wert der Frequenz auf dem Frequenzband;
- und, zu jedem Zeitpunkt der Erzeugung des Sendesignals, Verwenden der interpolierten Werte der optimalen Parameter zur Erzeugung des Annullierungssignals zum betreffenden Zeitpunkt.

**Claims**

1.  A linear frequency modulated continuous wave-LFMCW-monostatic radar system (10) comprising at least one channel comprising a transmitter (20), suitable for delivering a transmission signal, and a receiver (30), suitable for receiving a reception signal, coupled by a circulator (12) to an antenna (14), the transmitter incorporating a first radiofrequency wave generator, configurable in amplitude, frequency, phase and/or delay, for generating the transmission signal, said at least one channel further comprising a cancellation chain (50) for canceling a leakage of the transmission signal toward the receiver, the cancellation chain incorporating a second radiofrequency wave generator (22), adjustable in amplitude, frequency, phase and/or delay, for generating a cancellation signal, and a coupler (56) interposed between the circulator (12) and the receiver (30) and able, from the cancellation signal, to inject a replica of the cancellation signal toward the receiver so as to cancel the leakage of the transmission signal, the first and second radiofrequency wave generators being synchronized with one another, **characterized in that**:

    the receiver (30) comprises a digital processing module (40) suitable for performing a "deramping" processing, followed by a fast Fourier transform processing, to determine quantities of the reception signal; and
    the cancellation chain (50) comprises a digital management device (52) able to execute a cancellation algorithm (53) making it possible to determine, during a calibration phase of the radar system, the optimal parameters of the cancellation signal canceling the leakage of the transmission signal, from the quantities of the reception signal determined by the digital processing module (40) of the receiver (30),
    the receiver (30) comprising, as input, a low noise amplifier (32) and a bypass switch (33) mounted in parallel with the low noise amplifier (32), so as to shunt the low noise amplifier (32) in the calibration phase of the radar system.

2.  The radar system according to claim 1, wherein the first and second radiofrequency wave generators are associated with a same direct digital synthesis component (22).

3.  The radar system according to claim 1 or claim 2, comprising a switch (13) interposed between the circulator (12) and the antenna (14) so as to connect an output on the antenna side of the circulator (12) to a reference load (15) in a calibration phase of the radar system making it possible to determine the optimal parameters of the cancellation signal.

4.  The radar system according to one of claims 1 to 3, wherein the second radiofrequency wave generator is able to read, in a storage means of the radar system, optimum parameters of the cancellation signal to be generated.

5.  The radar system according to one of claims 1 to 4, wherein the optimal parameters comprise an amplitude, a delay and a phase, these optimal parameters being able to depend on the frequency.

6.  The radar system according to claim 5, wherein, a frequency dispersion being introduced such that the frequency of the leakage signal is no longer exactly linear relative to time, the system is adapted so that, in a calibration phase, for each discrete value of the frequency $F_i$, obtained by subdividing the frequency band into N intervals indexed by an integer i, the first radiofrequency wave generator (22) is adapted to generate a transmission signal at the frequency $F_i$, and the digital management device (52) is adapted to determine the values of the optimal amplitude $A_{1i}$, delay $\tau_{1i}$ and phase $\varphi_{1i}$ parameters of a frequency cancellation signal $F_i$ allowing to cancel the corresponding leakage signal, and to perform an interpolation of the determined values to determine the interpolated values of the optimal parameters for each value of the frequency on the frequency band, so that, in an operational phase, at each instant of the generation of the transmission signal, the first radiofrequency wave generator (22) uses the interpolated values of the optimal parameters to generate the cancellation signal at the considered instant.

7.  A method for calibrating a linear frequency modulated continuous wave-LFMCW-monostatic radar system (10) according to any one of claims 1 to 6, consisting, while the bypass switch (33) is in the closed state so as to shunt the low noise amplifier (32), in generating a transmission signal and a cancellation signal, then in varying the parameters of the cancellation signal to determine optimal values of said parameters such that a leakage of the transmission signal toward the receiver is canceled.

8.  The method according to claim 7, wherein, a frequency dispersion being introduced so that the frequency of the leakage signal is no longer exactly linear with respect to time, the method is iterated for a plurality of discrete values of the frequency $F_i$ obtained by subdividing the frequency band into N intervals indexed by an integer i, the iteration i consisting in:

- generating a transmission signal by the first radiofrequency wave generator (22) at the frequency $F_i$;
- determining the values of the optimal amplitude $A_{1j}$, delay $\tau_{1i}$ and phase $\varphi_{1i}$ parameters of a frequency cancellation signal $F_i$ making it possible to cancel the corresponding leakage signal;
- after determining the values of the optimal parameters for each interval of the frequency band, interpolating the determined values to determine interpolated values of the optimal parameters for each value of the frequency on the frequency band;
- and, at each instant of the generation of the transmission signal, using the interpolated values of the optimal parameters to generate the cancellation signal at the considered instant.

FIG.1

PHASE CALIBRATION
CC = 1

110

Mesure de niveau de la
raie 0 ⌐112

Ajustement de retard de S1 ⌐114

Mesure du niveau de la
raie 0 ⌐122

120

Ajustement de la phase de S1 ⌐124

Recherche et mesure du
niveau de la raie 0 ⌐132

130

Ajustement de l'amplitude
de la raie 0 ⌐134

PHASE opérationnelle
CC = 0
Application de S1 calibré

100

## FIG.2

FIG.3

80

| K → | Pointeur rampes | $F_n$ → | Pointeur fréquence | $\varphi_n$ → | «calcul sinus» | S → | CNA | | Filtre | $S_0$ → |
|---|---|---|---|---|---|---|---|---|---|---|

81  82  84 $A_0$  85  86

$T_1$

# FIG.4

**FIG.5**

**RÉFÉRENCES CITÉES DANS LA DESCRIPTION**

**Documents brevets cités dans la description**

- KR 102090530 B1